# EUROPÄISCHE PATENTSCHRIFT

(11) **EP 3 632 066 B1**
(45) Veröffentlichungstag und Bekanntmachung des Hinweises auf die Patenterteilung: **02.11.2022**
(21) Anmeldenummer: 18726117.7
(22) Anmeldetag: 17.05.2018
(51) Int. Cl.: H04L 12/40, H04L 12/403, H04L 12/423, H04L 49/25

(54) **VORLADEN VON INSTRUKTIONEN**
PRE-LOADING OF INSTRUCTIONS
PRÉCHARGEMENT D'INSTRUCTIONS

(30) Priorität: 24.05.2017 DE 102017208838
(43) Veröffentlichungstag der Anmeldung: 08.04.2020
(60) Teilanmeldung: 21180049.5
(73) Patentinhaber: Wago Verwaltungsgesellschaft mbH, 32423 Minden (DE)
(72) Erfinder: QUAKERNACK, Frank, 33615 Bielefeld (DE); JEROLM, Daniel, 49152 Bad Essen (DE)
(74) Vertreter: Bardehle Pagenberg Partnerschaft mbB Patentanwälte Rechtsanwälte
(86) Internationale Anmeldenummer: PCT/EP2018/062932
(87) Internationale Veröffentlichungsnummer: WO 2018/215293

(56) Entgegenhaltungen:
- EP-A1- 3 157 201
- WO-A1-2006/069691
- DE-A1-102010 020 446

## Beschreibung

### 1. Gebiet der Erfindung

Die Erfindung betrifft im Allgemeinen einen Datenbusteilnehmer eines Automatisierungssystems und das Vorladen von Instruktionen und im Speziellen das Vorladen von Instruktionen zur Verarbeitung von Prozessdaten durch Datenbusteilnehmer eines Lokalbusses.

### 2. Stand der Technik

Datenbusteilnehmer und Prozessdaten werden zumeist im Kontext von Automatisierungsanlagen verwendet sind aber darauf nicht beschränkt.

Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme, insbesondere Feldbussysteme eingesetzt, mit denen die Automatisierungsgeräte beziehungsweise die E/A-Module an die Steuerung angeschlossen werden können. Derartige Teilnehmer eines Bussystems werden auch als Busteilnehmer bezeichnet. Weil auf dem Bussystem Daten ausgetauscht werden, werden die Busteilnehmer auch häufig als Datenbusteilnehmer bezeichnet. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist, wie zum Beispiel in WO 2006/069691 A1 beschrieben. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logikeinheiten, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logikeinheiten und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise lokalbusspezifische E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Lokalbussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt *(engl.* Header) oder angehängt *(engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können.

Ein Ringbus ist dabei eine spezialisierte Form eines Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einem Ringbus wird das Datenpaket von einem zum anderen Datenbusteilnehmer weitergegeben. Dabei empfängt zu jeder gegebenen Zeit ein Datenbusteilnehmer von seinem vorgelagerten Datenbusteilnehmer immer nur einen Teil des Datenpakets. Wenn die in diesem Teil enthaltenen Daten vom Datenbusteilnehmer verarbeitet worden sind, wird der Teil an den nachgelagerten Datenbusteilnehmer weitergeleitet und gleichzeitig wird von dem vorgelagerten Datenbusteilnehmer ein neuer Teil des Datenpakets empfangen. Auf diese Weise passieren alle Teile des Datenpakets sequentiell alle Datenbusteilnehmer.

Im Stand der Technik hängt die Verarbeitungszeit der Daten, also die Zeit zwischen Erfassen der Prozessdaten und dem Vorliegen eines Verarbeitungsergebnisses an den Datenbusteilnehmern, jeweils von deren Rechengeschwindigkeit ab, wie zum Beispiel in DE 10 2010 020 446 A1 beschrieben aber auch von der Verteilung der Daten im System, wie in EP 3 157 201 A1 beschrieben. Die sich in einem Ringbus ergebenden Verzögerungen der Verarbeitung richten sich also nach den jeweiligen Rechengeschwindigkeiten der Datenbusteilnehmer.

Aufgabe der vorliegenden Erfindung ist es ein Verfahren sowie einen Datenbusteilnehmer zur verbesserten Verarbeitung von Prozessdaten bereitzustellen.

### 3. Zusammenfassung der Erfindung

Diese Aufgabe wird mit einem Verfahren und einem Datenbusteilnehmer entsprechend der unabhängigen Ansprüche gelöst. Vorteilhafte Ausführungsformen sind in den Unteransprüchen beschrieben.

Ein Verfahren zum Verarbeiten von Prozessdaten an einem Datenbusteilnehmer in einem Lokalbus, insbesondere einem Ringbus, ist beschrieben. Dabei dient ein Datenbusteilnehmer zum Steuern oder Überwachen eines Prozesses, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Prozessdaten für den Lokalbus um oder umgekehrt. Die Datenbusteilnehmer können auch als Lokalbusteilnehmer bezeichnet werden. Die Datenbusteilnehmer empfangen die Prozessdaten oder senden diese weiter in Form von Symbolen.

Das erfindungsgemäße Verfahren weist dementsprechend zunächst den Schritt des Empfangens eines ersten Symbols während einer ersten Anzahl von Arbeitstakten auf. Dabei kann das Symbol beispielsweise aus Bits insbesondere einer festen Anzahl von Bits bestehen, zum Beispiel aus 8 Bit. Wenn diese Bits seriell über den Lokalbus empfangen werden, kann beispielsweise mit jedem Arbeitstakt eine bestimmte Anzahl von Bits, beispielsweise genau ein Bit des Symbols empfangen werden. Die erste Anzahl von Arbeitstakten zum Empfangen des kompletten ersten Symbols kann dann beispielsweise abhängig sein von der Anzahl von Bits, die das erste Symbol aufweist. Beispielsweise können zum Empfang von 8 Bits 10 Arbeitstakte benötigt werden, weil beispielsweise die 8 Bit mit 10 Bit kodiert sind. Während der ersten Anzahl von Arbeitstakten, also dem Empfangen des ersten Symbols, weist das erfindungsgemäße Verfahren den Schritt des Ladens zumindest einer ersten Instruktion aus einer Instruktionsliste auf. Das Laden der zumindest einen ersten Instruktion kann dabei beispielsweise aufweisen Lesen der zumindest einen ersten Instruktion aus einem Speicher. Dabei kann der Speicher ein Speicher sein, der im Datenbusteilnehmer angeordnet ist, d.h. Teil des Datenbusteilnehmers ist, oder ein Speicher auf den von dem Datenbusteilnehmer zugegriffen werden kann. Der Speicher kann dabei ein flüchtiger oder nicht flüchtiger Speicher sein. Im Speicher kann die Instruktion in einer Instruktionsliste hinterlegt sein. Eine Instruktionsliste weist einen Satz von Instruktionen auf zum Verarbeiten von Daten. Eine Instruktionsliste definiert dementsprechend ein Verhalten des Datenbusteilnehmers in Bezug auf die zu verarbeitenden Daten in einem oder mehreren Symbolen, also beispielsweise in Bezug auf die zu verarbeitenden Prozessdaten. Dabei dann die Instruktionsliste zumindest eine Instruktion vorzugsweise genau eine Instruktion für jedes empfangene Symbol aufweisen. Sollten keine Daten bei einem Symbol verarbeitet werden, weist die Instruktionsliste als Instruktion eine Nulloperation "NOP" (NOP - *engl.* No OPeration) auf oder "SKIP" Operation auf, die äquivalent sind.

Das erfindungsgemäße Verfahren weist des Weiteren den Schritt des Empfangens eines zweiten Symbols während einer zweiten Anzahl von Arbeitstakten auf, wobei das zweite Symbol zweite Prozessdaten aufweist. Während des Empfangens des zweiten Symbols werden die ersten Prozessdaten mit der geladenen zumindest einen Instruktion verarbeitet und während des Empfanges des zweiten Symbols beinhaltend die zweiten Prozessdaten wird zumindest eine zweite Instruktion geladen. Dabei kann das Verarbeiten der ersten Prozessdaten während der zweiten Anzahl von Arbeitstakten beispielsweise innerhalb einer ersten Hälfte der Anzahl der Arbeitstakte, insbesondere parallel zum Laden der zweiten Instruktion stattfinden. Das Laden der zumindest einen zweiten Instruktion kann dabei beispielsweise ein Lesen der zumindest einen zweiten Instruktion aus einem Speicher aufweisen. Dabei kann der Speicher ein Speicher sein, der im Datenbusteilnehmer angeordnet ist, d.h. Teil des Datenbusteilnehmers ist, oder ein Speicher auf den von dem Datenbusteilnehmer zugegriffen werden kann. Der Speicher kann dabei ein flüchtiger oder nicht flüchtiger Speicher sein.

D.h. Instruktionen, die zur Verarbeitung von Prozessdaten in einem Symbol notwendig sind werden bereits vor der eigentlichen Verarbeitung während des Empfangs des Symbols geladen, um somit eine schnelle und vor allem deterministische Verarbeitung der Prozessdaten zu gewährleisten.

Das beschriebene vorzeitige Laden der Instruktionen kann für alle zu empfangenden und zu verarbeitenden Symbole wiederholt werden. Dabei bedeutet vorzeitiges Laden, dass Instruktionen bereits zu einem Zeitpunkt geladen werden, bevor die mit diesen Instruktionen zu verarbeitenden empfangenen Symbole und dementsprechend die zu verarbeitenden empfangenen Prozessdaten vollständig vorliegen. Die Anzahl der zu verarbeitenden Symbole richtet sich dabei nach den auf dem Lokalbus ausgetauschten Daten. Zumeist werden Daten in einem Lokalbus anhand von Datenpaketen übertragen, die eine Anzahl von Symbolen beinhalten können. Die Datenpakete können auch als Telegramme bezeichnet werden. Ein Datenpaket weist beispielsweise Header, Payload und vorteilhafterweise eine Prüfsumme auf. Ein Datenpaket ist vorteilhafterweise ein Kommunikationsdatenpaket oder ein Prozessdatenpaket. Ein Kommunikationsdatenpaket enthält keine Prozessdaten. Vorteilhafterweise enthält ein Kommunikationsdatenpaket Daten insbesondere zum Programmieren und/oder zum Steuern und/oder zum Überwachen und/oder zum Identifizieren zumindest eines Datenbusteilnehmers. Ein Prozessdatenpaket weist Prozessdaten auf, die von den Datenbusteilnehmern des Lokalbusses gesendet und/oder empfangen werden. Die Prozessdaten werden zur Steuerung eines Automatisierungsprozesses verwendet.

Durch das Laden der Instruktionen zum Verarbeiten der in den Symbolen der Datenpakete enthaltenen Prozessdaten können die einem Datenbusteilnehmer zur Verfügung stehenden Arbeitstakte optimal genutzt werden und es ist möglich, dass ein Datenbusteilnehmer eine Verarbeitung innerhalb der zur Verfügung stehenden Arbeitstakte bewerkstelligen kann, ohne dass eine Erhöhung der Rechengeschwindigkeit notwendig ist.

In einer bevorzugten Ausführungsform des erfindungsgemäßen Verfahrens entspricht die erste Anzahl an Arbeitstakten der Anzahl von Arbeitstakten, die zum Empfang des ersten Symbols benötigt werden. Beispielsweise kann das Symbol aus einer Anzahl von Bits bestehen und pro Arbeitstakt können eine bestimmte Anzahl an Bits seriell vom Lokalbus empfangen werden. Das Symbol kann beispielsweise aus 8 Bits bestehen, so dass beispielsweise 8 Arbeitstakte zum seriellen Empfangen der 8 Bits nötig sind, wenn pro Arbeitstakt nur ein Bit empfangen wird. Beispielsweise können die 8 Bit Daten eines Symbols auch mit 10 Bit kodiert werden, und entsprechend pro Symbol 10 Bits übertragen werden. Es ist dem Fachmann aber bewusst, dass ein Symbol auch andere Anzahlen an Bits aufweisen kann und dass die Anzahl der empfangenen Bits pro Arbeitstakt von der Implementierung des Lokalbusses abhängt. Das Verfahren kann auch ein seriell zu parallel Wandeln der empfangenen Symbole aufweisen. Beispielsweise kann das Symbol seriell und bitweise empfangen werden und jedes empfangene Bit kann in einem Register eingeschrieben werden. Sobald das Register genügend Bits des Symbols gesammelt hat, kann das Symbol parallel verarbeitet werden. Nach der Verarbeitung kann das verarbeitete Symbol erneut in das Register oder ein anderes Register geschrieben werden und wieder seriell auf den Lokalbus ausgegeben werden. Dem Fachmann sind aber auch noch andere Möglichkeiten der seriell zu parallel Wandlung bekannt. Das Verfahren kann dabei auch aufweisen, das Kodieren und Dekodieren der Symbole.

In einer weiteren bevorzugten Ausführungsform des erfindungsgemäßen Verfahrens weist dieses weiter auf das Laden von Prozessdaten aus einem Speicher während der ersten Anzahl von Arbeitstakten, wobei das Verarbeiten der im ersten Symbol beinhalteten ersten Prozessdaten aufweist ein Ändern der im ersten Symbol beinhalteten Prozessdaten basierend auf den aus dem Speicher geladenen Prozessdaten. Der Speicher kann dabei ein Speicher sein, der im Datenbusteilnehmer angeordnet ist, d.h. Teil des Datenbusteilnehmers ist, oder ein Speicher auf den von dem Datenbusteilnehmer zugegriffen werden kann. Der Speicher kann dabei ein flüchtiger oder nicht flüchtiger Speicher sein. Das Verarbeiten kann dabei das logische Verknüpfen der aus dem Speicher geladenen Prozessdaten mit den im ersten Symbol enthaltenen ersten Prozessdaten sein. Dabei können diese Verknüpfungen beliebig sein und beispielsweise auf einem reduzierten Satz basieren, wie zum Beispiel "AND", "OR", "NOT", "NOR", "XOR", "NAND", "SHIFT", "SKIP", "INCREMENT", NEGATION" etc. oder einer Kombination daraus. Das Verarbeiten der Prozessdaten kann dabei beispielsweise bitgranular geschehen, d.h. ein oder mehrere Bits werden unabhängig voneinander verarbeitet. Es ist dem Fachmann bewusst, dass auch wenn hier nur von den ersten Prozessdaten gesprochen wird, sich dies auch auf alle anderen Prozessdaten beziehen kann, weil eben diese für den genannten Schritt die ersten Prozessdaten sein können.

In einer weiteren bevorzugten Ausführungsform des erfindungsgemäßen Verfahrens weist das Verarbeiten das Schreiben der im ersten Symbol beinhalteten Prozessdaten in einen Speicher auf. Der Speicher kann dabei ein Speicher sein, der im Datenbusteilnehmer angeordnet ist, d.h. Teil des Datenbusteilnehmers ist, oder ein Speicher auf den von dem Datenbusteilnehmer zugegriffen werden kann. Der Speicher kann dabei ein flüchtiger oder nicht flüchtiger Speicher sein. Das Verarbeiten der Prozessdaten kann dabei beispielsweise bitgranular geschehen, d.h. ein oder mehrere Bits werden unabhängig voneinander verarbeitet. Es ist dem Fachmann bewusst, dass auch wenn hier nur von den ersten Prozessdaten gesprochen wird, sich dies auch auf alle anderen Prozessdaten beziehen kann, weil eben diese für den genannten Schritt die ersten Prozessdaten sein können. Dabei kann das Schreiben in den Speicher davon abhängen, ob ein Gültigkeitssignal vorhanden ist, d.h. die Gültigkeit der empfangenen Daten überprüft wurde.

D.h. das Verarbeiten kann ein Lesen von Prozessdaten aus einem Speicher oder das Schreiben von Prozessdaten in einen Speicher aufweisen. Dabei kann der Speicher aus dem gelesen wird der gleiche sein wie der in den geschrieben wird. Es ist auch denkbar, dass in einem ersten Schritt erste Prozessdaten in den Speicher geschrieben werden, die während des Empfangs eines unmittelbar oder mittelbar folgenden Symbols wieder gelesen werden und mit zweiten Prozessdaten aus diesem folgenden Symbol verknüpft werden.

Bei der Verarbeitung der im ersten Symbol beinhalteten Prozessdaten müssen die Prozessdaten nicht notwendigerweise verändert werden. Trotzdem kann die Zeit des Empfangens des zweiten Symbols genutzt werden, so dass der Datenbusteilnehmer basierend auf der zumindest einen vorgeladenen Instruktion eine andere Verarbeitung durchführen kann. Diese Verarbeitung kann beispielsweise darin bestehen, dass Prozessdaten innerhalb des Speichers miteinander verknüpft werden. Dies kann beispielsweise dazu genutzt werden, um eine Vorverarbeitung zu bewerkstelligen. Die Arbeitstakte des Datenbusteilnehmers können also in diesem Fall verwendet werden, um eine entsprechende Verarbeitung von bereits im Speicher vorhandenen Prozessdaten zu bewerkstelligen. Es ist auch denkbar, dass der Datenbusteilnehmer während dieser Zeit Prozessdaten innerhalb des Speichers umspeichert. Dem Fachmann ist bewusst, dass die Arbeitstakte des Datenbusteilnehmers während denen keine Verarbeitung des empfangenen Symbols stattfindet auch anderweitig verwendet werden können. Die anderweitige Verarbeitung kann dabei ebenfalls durch die im ersten Symbol vorgeladene Instruktion vorgegeben werden.

In einer weiteren bevorzugten Ausführungsform des erfindungsgemäßen Verfahrens wird das Laden der ersten und zweiten Instruktion getriggert durch ein jeweiliges Gültigkeitssignal, zugehörig zum Empfang des jeweils vorhergehenden Symbols. D.h. erst wenn das Symbol korrekt empfangen wurde und ein entsprechendes Gültigkeitssignal generiert und ausgegeben wurde, werden die jeweiligen Instruktionen geladen. Auch das Verarbeiten kann innerhalb einer festen Anzahl von Arbeitstakten, insbesondere innerhalb von zwei Arbeitstakten, nach Ausgabe des Gültigkeitssignals durchgeführt werden.

Das erfindungsgemäße Verfahren weist auch auf, dass ein Symbol, welches insbesondere dem ersten Symbol vorausgeht einen Instruktionslistenindex (ILI) aufweist. Dieser Instruktionslistenindex wird verwendet zum Auswählen einer Instruktionsliste zum Verarbeiten der Prozessdaten in den folgenden Symbolen. Der Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste im Datenbusteilnehmer gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle *(engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Der Instruktionslistenindex kann vorzugsweise einen Wert aus einem festen Wertebereich aufweisen. Beispielsweise kann der Instruktionslistenindex aus dem Bitwertebereich zwischen 0000 bis 1111 stammen. Es ist dem Fachmann aber klar, dass auch andere Wertebereiche verwendet werden können. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Die über den Instruktionslistenindex aufgefundene Instruktionsliste wird dann durch den Datenbusteilnehmer ausgeführt zum Verarbeiten der Prozessdaten in den folgenden Symbolen. Dabei kann die Instruktionsliste einen Satz von Instruktionen aufweisen, beispielsweise eine Instruktion für jedes zu empfangende Symbol. Dabei kann die Instruktionsliste Instruktionen in einer Reihenfolge aufweisen, wobei die Reihenfolge der zu empfangenden Symbole entspricht. Das Laden der Instruktionen kann beinhalten Laden von zwei 32-Bit Instruktionen und Verbinden der zwei 32-Bit Instruktionen zu einer 64-Bit Instruktion. Dabei können die zwei 32.Bit Instruktionen direkt aufeinander folgen. Die zur Verfügung stehenden Instruktionen können dabei beispielsweise sein "SKIP", "MOVE", "NEGATION", "AND", "OR" und "INKREMENT" oder eine Kombination daraus.

In einer weiteren bevorzugten Ausführungsform des erfindungsgemäßen Verfahrens werden die Symbole in einer bestimmten Reihenfolge empfangen, wobei das erste Symbol unmittelbar vor dem zweiten Symbol und das zweite Symbol unmittelbar vor dem dritten Symbol empfangen wird usw. Dabei kann die Reihenfolge der Symbole der Reihenfolge der Instruktionen in der Instruktionsliste entsprechen. Dementsprechend kann auf die erste Anzahl an Arbeitstakten die zweite Anzahl von Arbeitstakten folgen usw., wobei sich die Anzahl der Arbeitstakte nicht überlappen.

Die oben genannte Aufgabe wird auch gelöst durch einen erfindungsgemäßen Datenbusteilnehmer eines Lokalbusses, insbesondere eines Ringbusses. Der Datenbusteilnehmer weist auf, zumindest ein Mittel zum Empfangen von Symbolen über den Lokalbus. Dabei kann das Mittel zum Empfangen eine Empfängerschaltung oder eine Transceiverschaltung sein. Die Schaltungen sind zum Beispiel in einem anwendungsspezifischen integrierten Schaltkreis *(engl.* ASIC) oder in einer Feld programmierbaren (Logik-)Gatter-Anordnung *(engl.* FPGA) implementiert. Das Mittel zum Empfangen kann ein 8b10b-Code Umsetzer sein, der die seriell empfangen 10 Bit in parallele 8 Bit Daten umsetzt oder kann einen anderen seriell zu parallel Umsetzer aufweisen. Dabei kann das Mittel zum Empfangen angepasst sein jedes Symbol in jeweils einer vorgegebenen Anzahl von Arbeitstakten zu empfangen. Dabei kann das Mittel zum Empfangen in einer bestimmten Anzahl von Arbeitstakten jeweils ein Symbol empfangen, wobei in dem Symbol Prozessdaten enthalten sein können, die zu verarbeiten sind.

Des Weiteren weist der erfindungsgemäße Datenbusteilnehmer ein Mittel zum Laden von Instruktionen auf, die beispielsweise aus einem flüchtigen oder nicht flüchtigen Speicher geladen werden können. Dabei kann der Speicher Teil des Datenbusteilnehmers sein oder dieser kann auf den Speicher zugreifen. Mit zumindest einer geladenen Instruktion kann dabei zumindest ein Symbol verarbeitet werden, bzw. die Prozessdaten in dem Symbol verarbeitet werden. Es ist aber auch denkbar, dass die zumindest eine Instruktion eine Verarbeitung von bereits am Datenbusteilnehmer gespeicherten Prozessdaten bewirkt.

Der erfindungsgemäße Datenbusteilnehmer weist auch zumindest ein Mittel zum Verarbeiten von Prozessdaten aus den empfangenen Symbolen basierend auf geladenen Instruktionen auf, wobei das Mittel zum Laden von Instruktionen angepasst ist, zumindest eine Instruktion zum Verarbeiten von Prozessdaten eines Symbols in einer Anzahl von Arbeitstakten zu Laden, während das mit der Instruktion zu verarbeitende Symbol empfangen wird. D.h. während des Empfangens eines Symbols wird auch die Instruktion geladen mit der das Symbol bzw. die im Symbol beinhalteten Prozessdaten verarbeitet werden. Die Verarbeitung des vorliegenden Symbols erfolgt während gleichzeitig ein darauf folgendes Symbol empfangen wird. Das Mittel zum Verarbeiten kann ein Mikrocontroller oder eine Rechenschaltung sein, die insbesondere aus Gatterelementen eines integrierten Schaltkreises gebildet sein kann. Die Rechenschaltung kann als digitale Logik ausgebildet sein, die insbesondere zumindest als ein Teil eines Halbleiterchips ausgebildet ist. Die Schaltungen können in einem ASIC oder einem FPGA implementiert sein.

In einer bevorzugten Ausführungsform des erfindungsgemäßen Datenbusteilnehmers ist das Mittel zum Empfangen angepasst ein Gültigkeitssignal zu erzeugen und das Mittel zum Laden ist angepasst, die Instruktionen vor Erhalt des Gültigkeitssignals zu Laden. Dabei kann sich das Gültigkeitssignal beispielsweise darauf beziehen, dass alle erwarteten Daten empfangen wurden. Beispielsweise kann bei einem 8b10b-Code, bei dem 8 Bit Daten mit 10 Bit kodiert werden, das Gültigkeitssignal erzeugt werden, wenn alle 10 Bit empfangen wurden oder wenn die Umwandlung aus den 10 Bit in die 8 Bit erfolgreich war.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des

Gegenstands der Erfindung. Es zeigen:
- Fig. 1: ein schematisches Blockdiagramm einer beispielhaften Automatisierungsanlage mit einer speicherprogrammierbaren Steuerung und einem beispielhaften Ringbus;
- Fig. 2: eine schematische Darstellung eines Datenpakets bestehend aus Symbolen, wobei einige Symbole Prozessdaten tragen;
- Fig. 3a,b: schematische Darstellungen von Instruktionslisten mit Instruktionen zur Verarbeitung der in Fig. 2 gezeigten Prozessdaten; und
- Fig. 4: ein beispielhaftes Zeitdiagramm zeigend das Vorladen von Instruktionen zur Verarbeitung der in Fig. 2 gezeigten Prozessdaten.

### 5. Beschreibung bevorzugter Ausführungsbeispiele

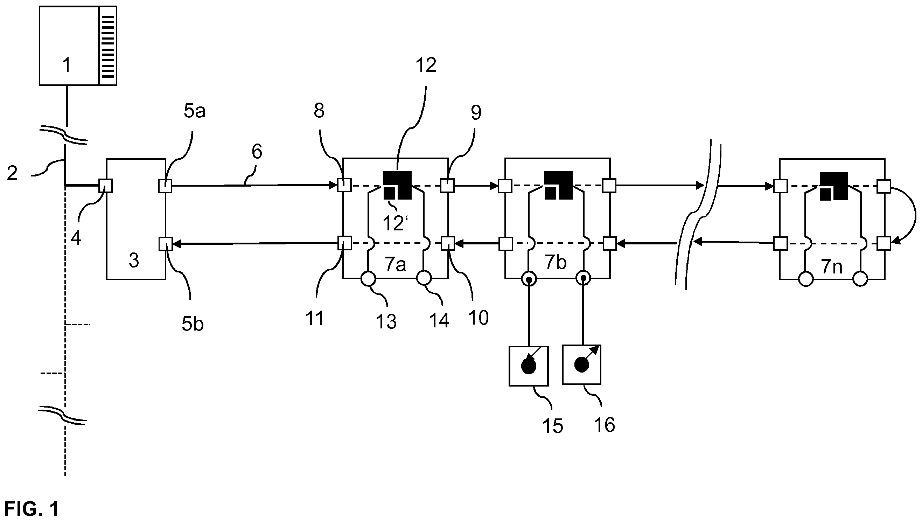

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Die Daten auf dem Lokalbus 6 können auch als Lokalbusdaten bezeichnet werden. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder optische Verbindung herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b,..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

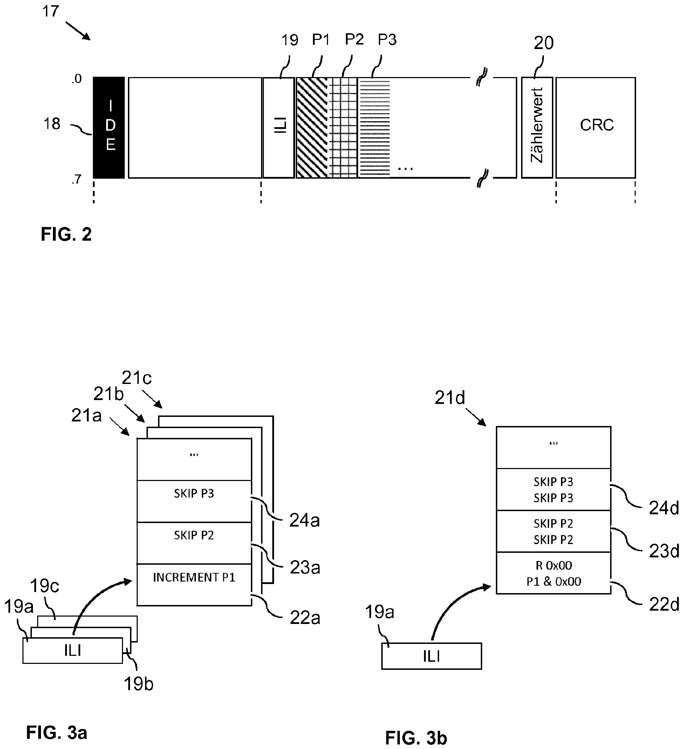

Des Weiteren weisen die Datenbusteilnehmer 7a, 7b, ..., 7n in dem in Figur 1 gezeigten Ausführungsbeispiel auch eine Verarbeitungseinheit 12 auf, die beispielsweise aus einer Verarbeitungskomponente und einer Logikeinheit besteht, die in Figur 3 näher gezeigt sind. Die Verarbeitungseinheit 12 kann auch als Gesamtschaltung des Datenbusteilnehmers bezeichnet werden. D.h. die Verarbeitungseinheit 12 empfängt Daten über die Eingänge 8 und 10 und gibt Daten auf den Ausgängen 9 und 11 aus. Des Weiteren kann die Verarbeitungseinheit 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, ..., 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation. Ein Zyklusrahmen kann dabei beispielsweise als ein wiederkehrendes (zyklisches) vorzugsweise äquidistantes Zeitintervall, in dem Daten auf dem Ringbus 6 übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Daten vorgesehen, die innerhalb des Zyklusrahmens in Form von Datenpaketen übertragen werden können. Die Startkennung (SOC) und die Datenpakete werden über den Ringbus 6 übertragen und durchlaufen alle Datenbusteilnehmer 7a, 7b, ..., 7n. Vorteilhafterweise wird der Zyklusrahmen durch den Lokalbusmaster 3 im Ringbus 6 initiiert. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Ringbus 6. Das Signal ermöglicht es den Datenbusteilnehmern 7a, 7b, ..., 7n, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück, Einheit, oder Symbol bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen. Wenn die Datenübertragung auf dem Lokalbus 6 seriell ist, so können die Schnittstellen 8 und 10 angepasst sein eine seriell zu parallel Umsetzung durchzuführen und die Schnittstelen 9 und 11 eine parallel zu seriell Umsetzung. Hierzu können die Schnittstellen 8, 9, 10, 11 entsprechende Register - hier nicht gezeigt - aufweisen. Die Schnittstellen 8, 9, 10, 11 können auch dazu angepasst seien eventuell nötige Kodierungen und Enkodierungen durchzuführen. Beispielsweise kann auf dem Lokalbus ein 8b10b-Code verwendet werden, deren Umsetzung durch die Schnittstellen 8, 9, 10 und 11 bewerkstelligt werden kann.

Das Datenpaket durchläuft einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welcher vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Datenpakete in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten bewerkstelligt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden oder vorteilhaft während der laufenden Kommunikation den Datenbusteilnehmern 7a, 7b, ..., 7n zugesandt werden, so dass eine Programmierung der Datenbusteilnehmer 7a, 7b, ..., 7n ohne Unterbrechung der Kommunikation stattfindet.

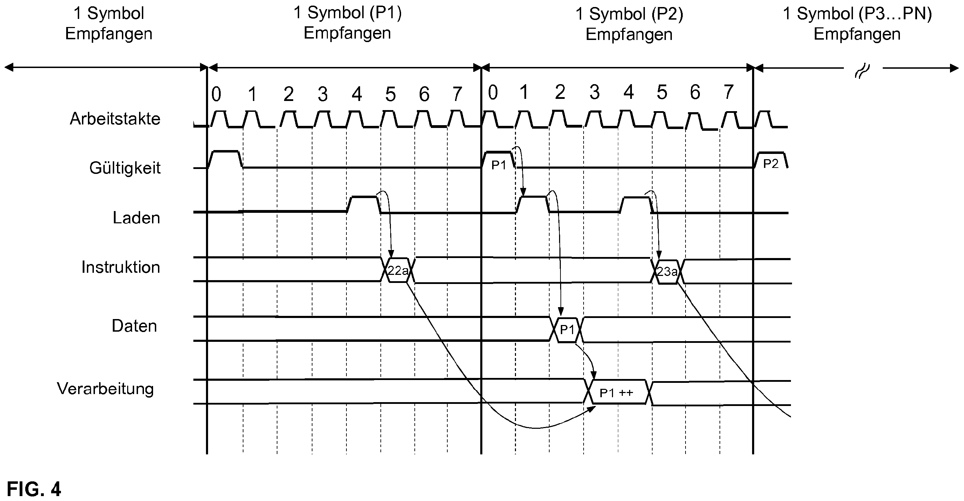

Welche der Instruktionslisten die Datenbusteilnehmer 7a, 7b, ..., 7n verwenden sollen kann den Datenbusteilnehmern 7a, 7b, ..., 7n anhand von einem Instruktionslistenindex mitgeteilt werden. Dieser Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle *(engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Der Instruktionslistenindex kann vor den zu verarbeitenden Lokalbusdaten in das Datenpaket eingefügt werden, so dass die Datenbusteilnehmer 7a, 7b, ..., 7n entsprechend der Reihenfolge der Lokalbusdaten im Datenpaket die entsprechende Instruktionsliste verwenden können. Die Instruktionslisten weisen dabei Instruktionen auf, die an die Reihenfolge der Lokalbusdaten im Datenpaket angepasst sind. Die Instruktionslisten können dabei beispielsweise für Lokalbusdaten, die nicht an den Datenbusteilnehmer 7a, 7b, ..., 7n gerichtet sind eine "SKIP" Instruktion aufweisen, also den Datenbusteilnehmer 7a, 7b, ..., 7n anweisen den entsprechenden Teil des Datenpakets zu überspringen, wohingegen die Instruktionsliste für Lokalbusdaten, die an den Datenbusteilnehmer 7a, 7b, ..., 7n gerichtet sind entsprechende Instruktionen zum Verarbeiten der Lokalbusdaten aufweisen kann. Die Verarbeitung der Lokalbusdaten kann damit entkoppelt werden von der tatsächlichen Position der Lokalbusdaten im Datenpaket, da die Datenbusteilnehmer mit Hilfe der Instruktionslisten angepasst werden an die Reihenfolge der Lokalbusdaten im Datenpaket. Die Verarbeitung von Lokalbusdaten durch die Verarbeitungseinheit 12 ist in Figuren 3 und 4 näher gezeigt.

Zunächst wird aber in Figur 2 schematisch ein von einem Lokalbusmaster 3 verwendetes Datenpaket 17 mit Lokalbusdaten P1, P2, P3 gezeigt. Die Lokalbusdaten P1, P2, P3 sind beispielswiese Prozessdaten. Das gezeigte Datenpaket 17 besteht aus einem allgemeinen Kopfteil, einem Informationsteil sowie einem Prüfsummenteil.

Der Kopfteil beinhaltet ein Feld 18, welches ein eindeutiges nur einmal auftretendes Bitmuster IDE enthält, welches auch als Codewort oder Paketkennung bezeichnet werden kann. Die Anzahl und die Ausgestaltung von eindeutigen Bitmustern beziehungsweise Codewörtern hängen ab von der auf dem Ringbus 6 verwendeten Kodierung. Alternativ oder zusätzlich können aber auch spezielle Bitmuster oder Codewörter in dem verwendeten Busprotokoll definiert werden. Es ist dabei nur von Bedeutung, dass die Datenbusteilnehmer 7a, 7b, ..., 7n eineindeutig aus dem Bitmuster beziehungsweise Codewort des Feldes 18 erkennen können, um welche Art von Datenpaket 17 es sich handelt. Das Codewort des Feldes 18 wird beispielsweise über eine Bypassverbindung unmittelbar weitergeleitet. In dem hier gezeigten Ausführungsbeispiel haben die Datenbusteilnehmer 7a, 7b , ..., 7n Kenntnis darüber, dass wenn ein Feld 18 mit einem Bitmuster IDE empfangen wird, das es sich um ein Datenpaket 17 handelt, das Prozessdaten P1, P2, P3 trägt.

Der Kopfteil kann auch noch weitere Informationen beinhalten, die beispielsweise anzeigen, ob sich das Datenpaket 17 in Abwärtsrichtung oder Aufwärtsrichtung bewegt. Hierzu kann beispielsweise der letzte Datenbusteilnehmer 7n in den Kopfteil eine Information schreiben, dass das Datenpaket 17 bereits diesen Datenbusteilnehmer 7n passiert hat und zurückgesendet wurde in Richtung Lokalbusmaster 3. Des Weiteren kann der Kopfteil auch noch eine Information über die Länge des Datenpakets 17 enthalten, so dass die Datenbusteilnehmer 7a, 7b, ..., 7n die Integrität des Datenpakets 17 überprüfen können beziehungsweise Kenntnis darüber haben, wie viele Teile des Datenpakets 17 noch vom Datenbusteilnehmer 7a, 7b, ..., 7n empfangen werden, bevor ein neues Datenpaket 17 startet. Dem Fachmann sind aber auch noch andere Felder bekannt, die in einen Kopfteil eines Datenpakets 17 geschrieben werden können, die zur Steuerung oder Fehlererkennung durch die Datenbusteilnehmer 7a, 7b, ..., 7n genutzt werden können.

Der Informationsteil des Datenpakets 17 weist als erstes ein Instruktionslistenindexfeld 19, ILI, auf, welches angibt, welche Instruktionsliste die Datenbusteilnehmer 7a, 7b, ..., 7n verwenden sollen. Beispielsweise kann im Normalbetrieb des Ringbusses 6 vorgesehen sein, dass alle Datenbusteilnehmer 7a, 7b, ..., 7n ihre erste Instruktionsliste verwenden, wohingegen im Fehlerfall die zweite Instruktionsliste verwendet werden soll. Dabei kann der Instruktionslistenindex auf den Speicherplatz der im Datenbusteilnehmer 7a, 7b, ..., 7n gespeicherten Instruktionsliste direkt hinweisen, oder der Instruktionslistenindex kann einen Wert aufweisen, mit dem der Datenbusteilnehmer 7a, 7b, ..., 7n beispielsweise über eine Umsetzungstabelle die entsprechende Instruktionsliste auffinden kann. Der Informationsteil weist des Weiteren die eigentlichen Prozessdaten P1, P2 und P3 auf. Diese Prozessdaten P1, P2, P3 sind in dem hier gezeigten Ausführungsbeispiel mit unterschiedlichen Mustern gezeigt.

In dem hier gezeigten Ausführungsbeispiel ist das Datenpaket 17 in Symbole von jeweils 8 Bit eingeteilt. Das Datenpaket 17 wird auch in dieser Stückelung von den Datenbusteilnehmer 7a, 7b, ..., 7n empfangen und verarbeitet. D.h. als erstes sendet der Lokalbusmaster 3 das Symbol beziehungsweise Feld IDE 18 an den ersten Datenbusteilnehmer 7a, nach einer vorher bestimmten Zeit, sendet der Lokalbusmaster 3 ein weiteres Symbol des Kopfteiles des Datenpakets 17 an den Datenbusteilnehmer 7a, dieser wiederum sendet gleichzeitig das Symbol beziehungsweise Feld IDE 18 an den Datenbusteilnehmer 7b. Diese vorher bestimmte Zeit zwischen Senden und Empfangen der Symbole des Datenpakets, kann auch als Taktung des Lokalbusses bezeichnet werden, d.h. als Bustakt. Das Senden und Empfangen kann dabei zu jedem Takt geschehen oder kann mehrere Takte in Anspruch nehmen.

Des Weiteren weist das Datenpaket 17 im Informationsteil noch ein Feld 20 auf, welches als Zähler ausgestaltet sein kann, und welches von jedem Datenbusteilnehmer 7a, 7b, ..., 7n durch welchen dieser Teil des Datenpakets 17 bereits geleitet wurde inkrementiert oder dekrementiert werden kann. Der Zählerwert des Feldes 20 kann von dem Lokalbusmaster 3 verwendet werden, um zu überprüfen, ob das Datenpaket 17 alle Datenbusteilnehmer 7a, 7b, ..., 7n durchlaufen hat.

Das in Figur 2 gezeigte Datenpaket 17 weist ein eineindeutiges Bitmuster 18 auf und endet mit einer Prüfsumme. Dem Fachmann ist aber bewusst, dass ein Zyklusrahmen mehrere Datenpakete enthalten kann, die organisatorisch innerhalb eines Zyklusrahmen beinhaltet sind. Datenpakete selbst können durch eineindeutige vorangestellte Bitmuster gekennzeichnet werden.

In dem hier gezeigten Ausführungsbeispiel sind die Datenbusteilnehmer 7a, 7b, ..., 7n eingerichtet auszuwerten, dass wenn ein Datenpaket mit dem Bitmuster IDE 18 empfangen wird, dieses Datenpaket Prozessdaten P1, P2, P3, ..., PN trägt. Die Verarbeitung von Lokalbusdaten am Beispiel von den Prozessdaten P1, P2, P3 ist in Figuren 3 und 4 näher gezeigt.

Figur 3 zeigt eine schematisch Darstellung von Instruktionslisten 21a, 21b, 21c, 21d mit verschiedenen Instruktionen. Jeder Instruktionsliste 21a, 21b, 21c, 21d ist dabei ein eindeutiger Instruktionslistenindex 19a, 19b, 19c zugeordnet und umgekehrt.

In Figur 3a ist beispielsweise gezeigt, dass der Instruktionslistenindex 19a auf die Instruktionsliste 21a hinweist, welche die Instruktionen 22a, 23a und 24a aufweist. Dabei kann der Instruktionslistenindex 19a beispielsweise auf die erste Instruktion 22a der Instruktionsliste 21a im Speicher 12' des Datenbusteilnehmers 7a hinweisen. In den anderen Datenbusteilnehmern 7b, ..., 7n kann der Instruktionslistenindex 19a auch jeweils auf eine Instruktionsliste hinweisen, diese kann aber in jedem Datenbusteilnehmer 7a, 7b, ..., 7n unterschiedlich sein, d.h. unterschiedliche Instruktionen 22, 23 und 24 aufweisen.

In Figur 3b ist beispielsweise gezeigt, dass der Instruktionslistenindex 19a auf die Instruktionsliste 21d hinweist, welche Instruktionen 22d, 23d und 24d aufweist, die sich aber von denen in Figur 3a gezeigten Instruktionen unterscheiden. Dabei kann der Instruktionslistenindex 19a beispielsweise auf die erste Instruktion 22d der Instruktionsliste 21d im Speicher des Datenbusteilnehmers 7b verweisen. In dem in Figur 3b gezeigten Beispiel enthält jeder Eintrag der Instruktionsliste 21d nicht eine sondern zwei Einträge, es werden also für jedes Symbol zwei Instruktionen ausgeführt. Es ist dem Fachmann bewusst, dass die in den Figuren 3a und 3b gezeigten Instruktionslisten 21a, 21b, 21c, 21d nur exemplarisch gezeigt sind und diese beliebig ausgestaltet werden können.

Die Figur 4 zeigt in einem beispielhaften Zeitdiagramm das Vorladen der in der Figur 3a gezeigten Instruktionen 22a und 23a zur Verarbeitung der in Figur 2 gezeigten Prozessdaten des Datenpakets 17.

In Figur 4 wird beispielsweise gezeigt, dass während des Empfangens eines ersten Symbols, welches die Prozessdaten P1 trägt, die Instruktion 22a geladen wird. D.h. in diesem Moment hat der Datenbusteilnehmer, beispielsweise der Datenbusteilnehmer 7a, bereits Kenntnis darüber, welche Instruktionsliste verwendet werden soll, nämlich Instruktionsliste 21a, wie in Figur 3b gezeigt. Dass diese Instruktionsliste verwendet werden soll, ist dem Datenbusteilnehmer 7a durch den Instruktionslistenindex 19a mitgeteilt worden, der vor den Prozessdaten P1 übertragen wurde. Das Laden der Instruktion 22a kann in dem hier gezeigten Ausführungsbeispiel im Lesen des Speichers 12' des entsprechenden Datenbusteilnehmers 7a bestehen

In dem hier gezeigten Ausführungsbeispiel weist die Instruktion 22a, wie in Figur 3a zu sehen, den Verarbeitungsschritt von Inkrementieren der Prozessdaten P1 auf. Das Verarbeiten der entsprechenden Prozessdaten P1 wird dann im folgenden Symbol ausgeführt. In dem folgenden Symbol werden die Prozessdaten P2 empfangen. Wenn mit Arbeitstakt 0 die Gültigkeit der in dem Symbol zuvor empfangenen Prozessdaten P1 feststeht, so werden in Arbeitstakt 1 die empfangenen Prozessdaten P1 geladen, das Laden kann hier das Laden der Prozessdaten P1 in ein Register oder Buffer sein, so dass in Arbeitstakt 2 die Prozessdaten P1 vorliegen und ab Arbeitstakt 3 entsprechend der vorgeladenen Instruktion 22a verarbeitet werden können, also beispielsweise inkrementiert werden können. Während der Verarbeitung wird bereits die nächste Instruktion 23a der Instruktionsliste 21a vorgeladen, mit dieser Instruktion werden dann die Prozessdaten P2 verarbeitet.

D.h. durch das Vorladen einer Instruktion während des Empfangens eines Symbols kann eine optimale Zeitauslastung gewährleistet werden und es stellt sicher, dass die Datenbusteilnehmer 7a, 7b, ..., 7n in den ihnen zur Verfügung stehenden Arbeitstakten die entsprechende Verarbeitung durchführen können, ohne dass die Rechengeschwindigkeit angepasst werden müsste.

Auch wenn in der obigen Beschreibung von Daten die Rede ist, so ist dem Fachmann bewusst, dass hier auch das Singular von Daten, also ein einzelnes Datum, umfasst sein soll.

Die in dem beschriebenen Ausführungsbeispiel als separate Einheiten, Module oder Schnittstellen beschriebenen Bauteile der erfindungsgemäßen Vorrichtung können als separate Hardware implementiert sein, sind jedoch vorzugsweise auf demselben Halbleiterchip integriert. Vorzugsweise ist deren Funktion durch eine Hardware aus Logikgattern implementiert. Zum Beispiel können die Einheiten, Module, oder Schnittstellen auf einem FPGA/ASIC implementiert sein.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: Eingangsschnittstelle
- 9: Ausgangsschnittstelle
- 10: Abwärtsdateneingangsschnittstelle
- 11: Abwärtsdatenausgangsschnittstelle
- 12: Verarbeitungseinheit
- 13,14: Ein-/Ausgänge
- 15: Sensor
- 16: Aktor
- 17: Datenpaket mit Prozessdaten
- 18: IDE Codewort
- 19: Instruktionslistenindex
- P1, P2, P3: Lokalbusdaten, Prozessdaten
- 20: Zählerwert
- 21: Instruktionslisten
- 22, 23, 24: Instruktionen

## Patentansprüche

1. Ein Verfahren zum Verarbeiten von Prozessdaten (P1, P2, ..., PN) an einem Datenbusteilnehmer (7a, 7b, ..., 7n) in einem Lokalbus (6), insbesondere einem Ringbus, aufweisend:
Empfangen eines ersten Symbols eines Datenpakets (17) während einer ersten Anzahl von Arbeitstakten, wobei das erste Symbol erste Prozessdaten (P1) aufweist;
Laden zumindest einer ersten Instruktion (22a, 22b) aus einer Instruktionsliste (21a, 21b) während der ersten Anzahl von Arbeitstakten, wobei die Instruktionsliste (21a, 21b) anhand eines Instruktionslistenindex (19) ausgewählt wird, wobei der Instruktionslistenindex (19) in einem Symbol des Datenpakets (17) vor dem Symbol mit den ersten Prozessdaten (P1) empfangen wurde;
Empfangen eines zweiten Symbols des Datenpakets (17) während einer zweiten Anzahl von Arbeitstakten, wobei das zweite Symbol zweite Prozessdaten (P2) aufweist;
Verarbeiten von denen im ersten Symbol beinhalteten ersten Prozessdaten (P1) mit der zumindest einen geladenen ersten Instruktion (22a, 22b) während der zweiten Anzahl von Arbeitstakten; und
Laden zumindest einer zweiten Instruktion (23a, 23b) zum Verarbeiten von den zweiten Prozessdaten (P2) von dem zweiten Symbol während der zweiten Anzahl von Arbeitstakten.

2. Das Verfahren nach Anspruch 1, wobei die erste Anzahl von Arbeitstakten der Anzahl von Arbeitstakten zum Empfangen des ersten Symbols entspricht.

3. Das Verfahren nach Anspruch 2, wobei das erste Symbol seriell empfangen wird und parallel gewandelt wird.

4. Das Verfahren nach einem der Ansprüche 1 bis 3, weiter aufweisend:
Laden von Prozessdaten aus einem Speicher (12') während der ersten Anzahl von Arbeitstakten; und
wobei das Verarbeiten der im ersten Symbol beinhalteten ersten Prozessdaten (P1) aufweist ein Ändern der im ersten Symbol beinhalteten ersten Prozessdaten (P1) basierend auf den aus dem Speicher (12') geladenen Prozessdaten.

5. Das Verfahren nach einem der Ansprüche 1 bis 3,
wobei das Verarbeiten der im ersten Symbol beinhalteten ersten Prozessdaten (P1) aufweist ein Schreiben der im ersten Symbol beinhalteten ersten Prozessdaten (P1) in einen Speicher (12').

6. Das Verfahren nach einem der vorhergehenden Ansprüche, wobei das Verarbeiten während der zweiten Anzahl von Arbeitstakten parallel zum Laden der zweiten Instruktion (23a, 23b) durchgeführt wird.

7. Das Verfahren nach einem der vorhergehenden Ansprüche, wobei das Laden der zumindest einen ersten und der zumindest einen zweiten Instruktion (22a, 22b, 23a, 23b) getriggert wird durch ein jeweiliges Gültigkeitssignal zugehörig zu dem Empfangen des jeweiligen vorhergehenden Symbols.

8. Das Verfahren nach Anspruch 7, wobei das Verarbeiten innerhalb einer festen Anzahl von Arbeitstakten, insbesondere innerhalb von zwei Arbeitstakten, nach Ausgabe des Gültigkeitssignals durchgeführt wird.

9. Das Verfahren nach einem der vorhergehenden Ansprüche, wobei das Verarbeiten der Prozessdaten (P1, P2, ..., PN) bitgranular geschieht.

10. Das Verfahren nach einem der vorhergehenden Ansprüche, wobei das Laden der zumindest einen ersten und der zumindest einen zweiten Instruktion (22a, 22b, 23a, 23b) aufweist, Lesen der zumindest einen ersten und der zumindest einen zweiten Instruktion (22a, 22b, 23a, 23b) aus einem Speicher (12').

11. Das Verfahren nach einem der vorhergehenden Ansprüche, wobei die Symbole in einer bestimmten Reihenfolge empfangen werden, wobei das erste Symbol unmittelbar vor dem zweiten Symbol und das zweite Symbol unmittelbar vor einem dritten Symbol empfangen wird.

12. Das Verfahren nach einem der vorhergehenden Ansprüche, wobei das Laden der Instruktionen (22a, 22b, 23a, 23b) beinhaltet, Laden von zwei 32-Bit Instruktionen und Verbinden der zwei 32-Bit Instruktionen zu einer 64-Bit Instruktion.

13. Ein Datenbusteilnehmer (7a, 7b, ..., 7n) eines Lokalbusses (6), insbesondere eines Ringbusses, aufweisend:
ein Mittel zum Empfangen von Symbolen eines Datenpakets (17) über den Lokalbus (6), wobei das Mittel zum Empfangen die Symbole in jeweils einer vorgegebenen Anzahl von Arbeitstakten empfängt;
ein Mittel zum Laden von Instruktionen (22a, 22b, 23a, 23b);
ein Mittel zum Verarbeiten von Prozessdaten (P1, P2, ..., PN) aus den empfangenen Symbolen basierend auf Instruktionen (22a, 22b, 23a, 23b) geladen aus einer Instruktionsliste (21a, 21b), wobei die Instruktionsliste (21a, 21b) anhand eines Instruktionslistenindex (19) ausgewählt wird, wobei der Instruktionslistenindex (19) in einem Symbol des Datenpakets (17) vor dem Symbol mit den ersten Prozessdaten (P1) empfangen wurde;
wobei das Mittel zum Laden von Instruktionen angepasst ist, zumindest eine Instruktion (22a, 22b, 23a, 23b) zum Verarbeiten von Prozessdaten (P1, P2, ..., PN) eines Symbols in einer Anzahl von Arbeitstakten zu Laden, in der das mit der Instruktion zu verarbeitende Symbol empfangen wird, und
wobei das Mittel zum Verarbeiten angepasst ist, die in dem zu verarbeitenden Symbol empfangenen Prozessdaten (P1, P2, ..., PN) mit der geladenen zumindest einen Instruktion (22a, 22b, 23a, 23b) zu verarbeiten innerhalb einer Anzahl von Arbeitstakten in denen ein nachfolgendes Symbol empfangen wird.

## Claims

1. A method for processing process data (P1, P2, ..., PN) at a data bus subscriber (7a, 7b,..., 7n) in a local bus (6), in particular a ring bus, comprising:
receiving a first symbol of a data packet (17) during a first number of working cycles, wherein the first symbol comprises first process data (Pi);
loading at least one first instruction (22a, 22b) from an instruction list (21a, 21b) during the first number of working cycles, wherein the instruction list (21a, 21b) is selected on the basis of an instruction list index (19), wherein the instruction list index (19) was received in a symbol of the data packet (17) before the symbol with the first process data (Pi);
receiving a second symbol of the data packet (17) during a second number of working cycles, wherein the second symbol comprises second process data (P2);
processing the first process data (P1) contained in the first symbol with the at least one loaded first instruction (22a, 22b) during the second number of working cycles; and
loading at least one second instruction (23a, 23b) for processing the second process data (P2) from the second symbol during the second number of working cycles.

2. The method according to claim 1, wherein the first number of working cycles corresponds to the number of working cycles for receiving the first symbol.

3. The method according to claim 2, wherein the first symbol is received serially and is converted in parallel.

4. The method according to one of claims 1 to 3, further comprising:
loading process data from a memory (12') during the first number of working cycles; and
wherein processing the first process data (P1) contained in the first symbol comprises changing the first process data (P1) contained in the first symbol based on the process data loaded from the memory (12').

5. The method according to one of claims 1 to 3,
wherein the processing the first process data (P1) contained in the first symbol comprises writing the first process data (P1) contained in the first symbol into a memory (12').

6. The method according to one of the preceding claims, wherein the processing during the second number of working cycles is performed parallel to loading the second instruction (23a, 23b).

7. The method according to one of the preceding claims, wherein loading the at least one first and the at least one second instruction (22a, 22b, 23a, 23b) is triggered by a respective validity signal associated with the receiving of the respective preceding symbol.

8. The method according to claim 7, wherein the processing is carried out within a fixed number of working cycles, in particular within two working cycles, after output of the validity signal.

9. The method according to one of the preceding claims, wherein the processing of the process data (P1, P2, ..., PN) is performed in a bit-granular fashion.

10. The method according to one of the preceding claims, wherein loading the at least one first and the at least one second instruction (22a, 22b, 23a, 23b) comprises reading the at least one first and the at least one second instruction (22a, 22b, 23a, 23b) from a memory (12').

11. The method according to one of the preceding claims, wherein the symbols are received in a certain sequence, wherein the first symbol is received immediately before the second symbol and the second symbol is received immediately before a third symbol.

12. The method according to one of the preceding claims, wherein loading the instructions (22a, 22b, 23a, 23b) includes loading two 32-bit instructions and combining the two 32-bit instructions into a 64-bit instruction.

13. A data bus subscriber (7a, 7b, ..., 7n) of a local bus (6), in particular a ring bus, comprising:
means for receiving symbols of a data packet (17) via the local bus (6), wherein
the means for receiving receives the symbols in a respectively predetermined number of working cycles;
means for loading instructions (22a, 22b, 23a, 23b);
means for processing process data (P1, P2, ..., PN) from the received symbols based on instructions (22a, 22b, 23a, 23b) loaded from an instruction list (21a, 21b), wherein the instruction list (21a, 21b) is selected on the basis of an instruction list index (19), wherein the instruction list index (19) was received in a symbol of the data packet (17) before the symbol with the first process data (Pi);
wherein the means for loading instructions is adapted to load at least one instruction (22a, 22b, 23a, 23b) for processing process data (P1, P2, ..., PN) of a symbol in a number of working cycles, in which the symbol to be processed with the instruction is received, and
wherein the means for processing is adapted to process the process data (P1, P2, ..., PN) received in the symbol to be processed with the loaded at least one instruction (22a, 22b, 23a, 23b) within a number of working cycles, in which a subsequent symbol is received.

## Revendications

1. Un procédé de traitement de données de processus (P1, P2, ..., PN) sur un participant de bus de données (7a, 7b, ..., 7n) dans un bus local (6), en particulier dans un bus en anneau, comprenant :
la réception d'un premier symbole d'un paquet de données (17) pendant un premier nombre d'impulsions de travail, le premier symbole comprenant des premières données de processus (P1) ;
le chargement d'au moins d'une première instruction (22a, 22b) à partir d'une liste d'instructions (21a, 21b) pendant le premier nombre d'impulsions de travail, la liste d'instructions (21a, 21b) étant sélectionnée à l'aide d'un index de listes d'instruction (19), l'index de listes d'instructions (19) ayant été reçu dans un symbole du paquet de données (17) avant le symbole avec les premières données de processus (P1) ;
la réception d'un deuxième symbole du paquet de données (17) pendant un deuxième nombre d'impulsions de travail, le deuxième symbole comportant des deuxièmes données de processus (P2) ;
le traitement des premières données de processus (P1) contenues dans le premier symbole avec l'au moins une première instruction chargée (22a, 22b) pendant le deuxième nombre d'impulsions de travail ; et
le chargement au moins d'une deuxième instruction (23a, 23b) pour le traitement des deuxièmes données de processus (P2) du deuxième symbole pendant le deuxième nombre d'impulsions de travail.

2. Le procédé selon la revendication 1, dans lequel le premier nombre d'impulsions de travail correspond au nombre d'impulsions de travail pour la réception du premier symbole.

3. Le procédé selon la revendication 2, dans lequel le premier symbole est reçu en série et converti en parallèle.

4. Le procédé selon une des revendications 1 à 3, comprenant en outre :
le chargement de données de processus à partir d'une mémoire (12') pendant le premier nombre d'impulsions de travail ; et
dans lequel le traitement des premières données de processus contenues dans le premier symbole (P1) comporte une modification des premières données de processus (P1) contenues dans le premier symbole sur la base des données de processus chargées à partir de la mémoire (12').

5. Le procédé selon une des revendications 1 à 3, dans lequel le traitement des premières données de processus (P1) contenues dans le premier symbole comporte une écriture, dans une mémoire (12'), des premières données de processus (P1) contenues dans le premier symbole.

6. Le procédé selon une des revendications précédentes, dans lequel le traitement pendant le deuxième nombre d'impulsions de travail est réalisé parallèlement au chargement de la deuxième instruction (23a, 23b).

7. Le procédé selon une des revendications précédentes, dans lequel le chargement de l'au moins une première et de l'au moins une deuxième instruction (22a, 22b, 23a, 23b) est déclenché par l'intermédiaire d'un signal de validité respectif appartenant à la réception du symbole respectif précédent.

8. Le procédé selon la revendication 7, dans lequel le traitement est réalisé sur un nombre fixe d'impulsions de travail, en particulier sur deux impulsions de travail, après émission du signal de validité.

9. Le procédé selon une des revendications précédentes, dans lequel le traitement des données de processus (P1, P2, ..., PN) s'effectue de manière granulaire par bits.

10. Le procédé selon une des revendications précédentes, dans lequel le chargement de l'au moins une première et de l'au moins une deuxième instruction (22a, 22b, 23a, 23b) comporte une lecture de l'au moins une première et de l'au moins une deuxième instruction (22a, 22b, 23a, 23b) à partir de la mémoire (12').

11. Le procédé selon une des revendications précédentes, dans lequel les symboles sont reçus dans un ordre déterminé, le premier symbole étant reçu juste avant le deuxième symbole et le deuxième symbole étant reçu juste avant un troisième symbole.

12. Le procédé selon une des revendications précédentes, dans lequel le chargement des instructions (22a, 22b, 23a, 23b) comporte le chargement de deux instructions sur 32 bits et la concaténation des deux instructions sur 32 bits en une instruction sur 64 bits.

13. Un participant de bus de données (7a, 7b, ..., 7n) d'un bus local (6), en particulier d'un bus en anneau, comprenant :
un moyen pour recevoir des symboles d'un paquet de données (17) par l'intermédiaire du bus local (6), le moyen de réception contenant les symboles dans respectivement un nombre prescrit d'impulsions de travail ;
un moyen pour le chargement d'instructions (22a, 22b, 23a, 23b) ;
un moyen pour le traitement de données de processus (P1, P2, ..., PN) à partir des symboles reçus sur la base d'instructions (22a, 22b, 23a, 23b) chargées à partir d'une liste d'instructions (21a, 21b), la liste d'instructions (21a, 21b) étant sélectionnée à partir d'un index de listes d'instruction (19), l'index de listes d'instructions (19) ayant été reçu dans un symbole du paquet de données (17) avant le symbole avec les premières données de processus (P1) ;
dans lequel le moyen pour le chargement d'instructions est apte à charger au moins une instruction (22a, 22b, 23a, 23b) pour le traitement de données de processus (P1, P2, ..., PN) d'un symbole dans un nombre d'impulsions de travail dans lequel le symbole à traiter avec l'instruction est reçu, et
dans lequel le moyen pour le traitement est apte à traiter les données de processus (P1, P2, ..., PN) reçues dans le symbole à traiter avec l'au moins une instruction chargée (22a, 22b, 23a, 23b) sur un nombre d'impulsions de travail dans lesquels un symbole suivant est reçu.
